(19) Europäisches Patentamt / European Patent Office / Office européen des brevets

(11) **EP 2 590 043 A2**

(12) **EUROPEAN PATENT APPLICATION**

(43) Date of publication:
**08.05.2013 Bulletin 2013/19**

(21) Application number: **12190813.1**

(22) Date of filing: **31.10.2012**

(51) Int Cl.:
*G05D 1/08* (2006.01)    *B25J 13/08* (2006.01)
*B62D 57/032* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.11.2011 KR 20110114040**

(71) Applicant: **Samsung Electronics Co., Ltd
Gyeonggi-do 443-742 (KR)**

(72) Inventors:
• **Lee, Min Hyung
  Gyeonggi-do (KR)**
• **Roh, Kyung Shik
  Gyeonggi-do (KR)**

(74) Representative: **Taor, Simon Edward William et al
Venner Shipley LLP
200 Aldersgate
London EC1A 4HD (GB)**

(54) **Walking robot and control method thereof**

(57)    A control method of a walking robot having at least one joint unit provided at a leg thereof, the method comprising:calculating a compensation value for the at least one joint unit using an angle between a ground and deepest corner points of stairs; generating a stairs-walking target-trajectory required to allow the robot to walk on the stairs using the calculated compensation value and a level-walking target-trajectory; calculating a torque that tracks the generated stairs-walking target-trajectory; andcontrolling walking of the robot on the stairs by transmitting the calculated torque to the at least one joint unit.

**FIG. 4**

EP 2 590 043 A2

## Description

Embodiments disclosed herein relate to a walking robot, which generates a stairs-walking target-trajectory, and a control method thereof.

Research and development of walking robots which have a joint system similar to that of humans and coexist with humans in human working and living spaces is actively progressing. The walking robots are multi-legged walking robots having two legs, or three or more legs. To achieve stable walking of the robot, actuators, such as electric motors or hydraulic motors, located at respective joints of the robot need to be driven. As methods to drive these actuators, there are a position-based Zero Moment Point (ZMP) control method in which command angles of respective joints, i.e. command positions, are given and the joints are controlled so as to track the command positions, and a torque-based Finite State Machine (FSM) control method in which command torques of respective joints are given and the joints are controlled so as to track the command torques.

In the ZMP control method, for example, a walking direction, stride and walking velocity of a robot are preset to satisfy a ZMP constraint in that a ZMP is present in a safety region within a support polygon formed by one or more supporting legs. For example, if the robot is supported by one leg, a support polygon may be formed in the region of the leg, and if the robot is supported by two legs, a region may be set to have a small area in consideration of safety within a convex polygon including the region of the two legs. Walking patterns of the respective legs may be generated corresponding to the preset values, and walking trajectories of the respective legs based on the walking patterns may be calculated. Additionally, angles of joints of the respective legs are calculated based on inverse kinematics of the calculated walking trajectories, and in turn target control values of the respective joints are calculated using current angles and target angles of the respective joints. Moreover, servo control allowing the respective legs to track the calculated walking trajectories per control time is carried out. That is, during walking of the robot, whether or not positions of the respective legs accurately track the walking trajectories depending on the walking patterns is detected, and if it is detected that the respective legs deviate from the walking trajectories, torques of the motors are adjusted so that the respective legs accurately track the walking trajectories.

The ZMP control method is a position-based control method enabling accurate position control, but needs to perform accurate angle control of the respective joints in order to control the ZMP, and thus requires high servo gain. This is accompanied by low energy efficiency due to high current, and high joint stiffness, having a serious effect on the surrounding environment. Furthermore, since elimination of kinematic singularity may be necessary to calculate the angles of the respective joints, the robot always walks with bent knees, having an unnatural gait.

On the other hand, instead of tracking positions per control time, in the FSM control method, a finite number of operating states of a robot is predefined, target torques of respective joints are calculated with reference to the respective operating states during walking, and the joints are controlled so as to track the target torques. Controlling the torques of the respective joints during walking may cause high energy efficiency and low joint stiffness owing to low servo gain, providing safety for the surrounding environment. Moreover, it may be unnecessary to eliminate kinematic singularity, which allows the robot to have a natural gait in the same manner as that of a human. However, in the FSM control method in which walking of the robot is controlled based on the predefined operating states, the robot may have the possibility of losing balance due to inappropriate walking control. Therefore, the robot may perform an additional balancing motion regardless of a walking motion. For the balancing motion of the robot, calculation of command torques required to realize a stable balance may be necessary. This is accompanied by solution of a very complex dynamic equation, and up to now has not been realized in a robot having legs each of which has a joint structure of 6 degrees of freedom.

Therefore, it is an aspect of the present invention to provide a walking robot, which generates a stairs-walking target-trajectory using a level-walking target-trajectory, and a control method thereof.

Additional aspects of the invention will be set forth in part in the description which follows and, in part, will be obvious from the description, or may be learned by practice of the invention.

In accordance with one aspect of the present invention, a control method of a walking robot having at least one joint unit provided at a leg thereof, includes calculating a compensation value for the joint unit using an angle between the ground and the deepest corner points of stairs located in front of the robot, generating a stairs-walking target-trajectory required to allow the robot to walk on the stairs based on the calculated compensation value and a level-walking target-trajectory which may enable the robot to walk on level ground, calculating a torque that tracks the generated stairs-walking target-trajectory, and controlling walking of the robot on the stairs by transmitting the calculated torque to the joint unit.

Calculation of the angle between the ground and the deepest corner points of stairs may include calculating the angle using a height and depth of each stair.

The compensation value may be a compensation value for a pitch-axis of the joint unit. Calculation of the compensation value for the joint unit may include calculating compensation values for a hip joint and knee joint of a swing leg and a hip joint of a stance leg when the robot walks up the stairs.

Calculation of the compensation value for the joint unit may include calculating compensation values for a hip joint, knee joint and ankle joint of a stance leg when the robot walks down the stairs.

Generation of the stairs-walking target-trajectory may include multiplying an activation function by the calculated compensation value, and adding the compensation value multiplied by the activation function to the level-walking target-trajectory to generate the stairs-walking target-trajectory.

The control method may further include sensing the stairs, and calculating the angle between the ground and the deepest corner points of stairs.

The control method may further include receiving the angle between the ground and the deepest corner points of stairs. The angle may be received from a user or from an external source other than the user.

In accordance with another aspect of the present invention, a walking robot includes at least one joint unit provided at a leg of the robot, a compensation value calculator to calculate a compensation value for the joint unit using an angle between the ground and the deepest corner points of stairs located in front of the robot, a stairs-walking target-trajectory generator to generate a stairs-walking target-trajectory required to allow the robot to walk on the stairs based on the calculated compensation value and a level-walking target-trajectory required to allow the robot to walk on level ground, a torque calculator to calculate a torque that tracks the generated stairs-walking target-trajectory, and a servo controller to control walking of the robot on the stairs by transmitting the calculated torque to the joint unit.

The compensation value may be calculated using a height and depth of each stair. The compensation value may be a compensation value for a pitch-axis of the joint unit. The compensation value calculator may calculate compensation values for a hip joint and knee joint of a swing leg and a hip joint of a stance leg when the robot walks up the stairs.

The compensation value calculator may calculate compensation values for a hip joint, knee joint and ankle joint of a stance leg when the robot walks down the stairs.

The stairs-walking target-trajectory generator may multiply an activation function by the calculated compensation value, and may add the compensation value multiplied by the activation function to the level-walking target-trajectory to generate the stairs-walking target-trajectory.

The walking robot may further include a sensing unit to sense the stairs located in front of the robot, and a stairs angle calculator to calculate the angle between the ground and the deepest corner points of stairs.

The walking robot may further include an input unit to receive the angle between the ground and the deepest corner points of stairs.

In accordance with one aspect of the present invention, a control method of a walking robot may include storing a level-walking target-trajectory of the robot and dynamically changing a walking pattern of the robot in response to the robot sensing stairs. The robot may dynamically change the walking pattern upon sensing the stairs by calculating a compensation value for at least one joint unit of the robot using an angle between a ground and deepest corner points of the stairs, generating a stairs-walking target-trajectory using the calculated compensation value and the stored level-walking target-trajectory, calculating a torque based on the generated stairs-walking target-trajectory, and transmitting the calculated torque to the at least one joint unit.

Compensation values and the stairs-walking target-trajectory may be separately obtained for a swing leg and a stance leg of the robot, and compensation values may be selectively determined for joints of the swing leg and stance leg based upon whether the robot is ascending or descending the stairs.

According to a first aspect of the invention, there is provided a control method of a walking robot as set out in claim 1. Preferred features of this aspect are set out in claims 2 to 9.

According to a second aspect of the invention, there is provided a walking robot as set out in claim 10. Preferred features of this aspect are set out in claims 11 to 15.

These and/or other aspects of the invention will become apparent and more readily appreciated from the following description of the embodiments, taken in conjunction with the accompanying drawings of which:

FIG. 1 is a perspective view showing an external appearance of a walking robot according to an embodiment of the present invention;
FIG. 2 is a view showing main joint structures of the walking robot shown in FIG. 1;
FIG. 3 is a view showing operating states of the walking robot and control actions for the respective operating states in the case of FSM based walking;
FIG. 4 is an explanatory view of a walking robot control concept according to an embodiment of the present invention;
FIG. 5 is a control block diagram of a walking robot according to an embodiment of the present invention;
FIG. 6A is a view showing measurement of a rotating angle of a hip joint unit;
FIG. 6B is a view showing measurement of a rotating angle of a knee joint unit;
FIG. 6C is a view showing measurement of a rotating angle of an ankle joint unit;
FIG. 7 is a view showing an activation function applied to a compensation value calculated by the compensation value calculator of FIG. 5; and
FIG. 8 is a flowchart showing a control method of a walking robot according to an embodiment of the present invention.

Reference will now be made in detail to the embodiments of the present invention, examples of which are illustrated in the accompanying drawings, wherein like reference numerals refer to like elements throughout.

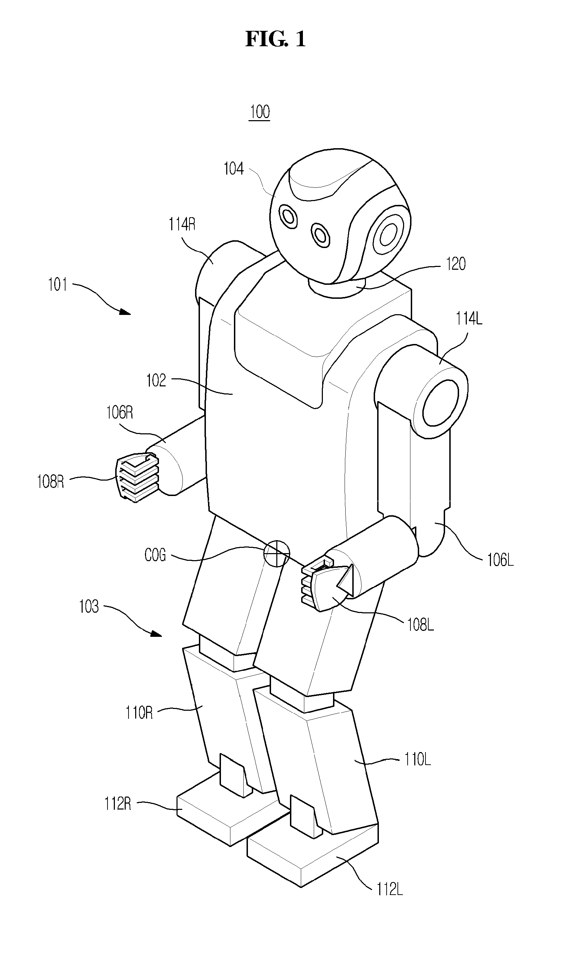

FIG. 1 is a perspective view showing an external appearance of a walking robot according to an embodiment of the present invention.

As shown in FIG. 1, the robot 100 is a bipedal walking robot, which walks erect with two legs 110L and 110R in the same manner as a human, and includes an upper body 101 including a torso 102, a head 104 and arms 106L and 106R, and a lower body 103 including two legs 110L and 110R.

The upper body 101 of the robot 100 may include the torso 102, the head 104 connected to the top of the torso 102 via a neck 120, the two arms 106L and 106R connected to both sides of an upper portion of the torso 102 via shoulders 114L and 114R, and hands 108L and 108R connected respectively to distal ends of the two arms 106L and 106R. The lower body 103 of the robot 100 may include the two legs 110L and 110R connected to both sides of a lower portion of the torso 102 of the upper body 101, and feet 112L and 112R connected respectively to distal ends of the two legs 110L and 110R.

Reference characters "R" and "L" respectively indicate the right side and the left side of the robot 100, and "COG" indicates the center of gravity of the robot 100.

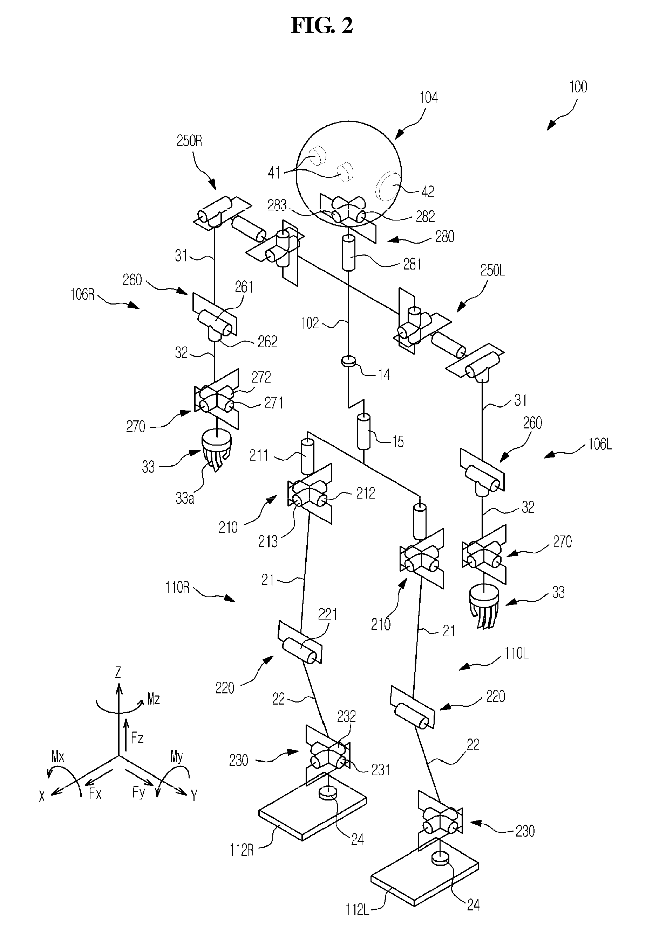

FIG. 2 is a view showing main joint structures of the walking robot shown in FIG. 1. As shown in FIG. 2, a pose sensor 14 is installed to the torso 102 of the robot 100. The pose sensor 14 generates pose data by detecting tilt angles, i.e. inclinations of the upper body 101 and of the two legs 110L and 110R with respect to a vertical axis, and angular velocities of the same. The pose sensor 14 may be installed to the two legs 110L and 110R in addition to the torso 102.

The torso 102 contains a waist joint unit 15 having 1 degree of freedom in a yaw direction to enable rotation of the upper body 101.

Additionally, cameras 41 to capture surrounding images and microphones 42 for input of user's voice are installed to the head 104 of the robot 100.

The head 104 may be connected to the torso 102 of the upper body 101 via a neck joint unit 280. The neck joint unit 280 may include a rotary joint 281 in the yaw direction (rotated around the z-axis), a rotary joint 282 in the pitch direction (rotated around the y-axis), and a rotary joint 283 in the roll direction (rotated around the x-axis), and thus has 3 degrees of freedom.

The rotary joints 281, 282 and 283 of the neck joint unit 280 are respectively connected to motors (for example, actuators, such as electric motors, hydraulic motors, or the like) for rotation of the head 104.

The two arms 106L and 106R of the robot 100 respectively include upper arm links 31, lower arm links 32 and hands 33.

The upper arm links 31 are connected to the upper body 101 via shoulder joint units 250L and 250R. The upper arm link 31 and the lower arm link 32 are connected to each other via an elbow joint unit 260, and in turn the lower arm link 32 and the hand 33 are connected to each other via a wrist joint unit 270.

The shoulder joint units 250L and 250R are provided at both sides of the torso 102 of the upper body 101 to connect the two arms 106L and 106R to the torso 102 of the upper body 101.

The elbow joint unit 260 may include a rotary joint 261 in the pitch direction and a rotary joint 262 in the yaw direction, and have 2 degrees of freedom.

The wrist joint unit 270 may include a rotary joint 271 in the pitch direction and a rotary joint 272 in the roll direction, and have 2 degrees of freedom.

The hand 33 may contain five fingers 33a. Each finger 33a may contain multiple joints (not shown) that are driven by motors. The fingers 33a execute various motions, such as gripping an object or pointing in a specific direction, in linkage with movements of the arm 106. Hand 33 may contain more or less than five fingers. The number of fingers may depend on the functions required of the robot for a particular application and/or the characteristics of the objects to be handled.

The two legs 110L and 110R of the robot 100 respectively include thigh links 21, calf links 22 and feet 112L and 112R.

The thigh link 21 corresponds to the thigh of a human, and is connected to the torso 102 of the upper body 101 via a hip joint unit 210. The thigh link 21 and the calf link 22 are connected to each other via a knee joint unit 220, and in turn the calf link 22 and the foot 112L or 112R are connected to each other via an ankle joint unit 230. The hip joint unit 210 may include a rotary joint (hip yaw joint) 211 in the yaw direction (rotated around the z-axis), a rotary joint (hip pitch joint) 212 in the pitch direction (rotated around the y-axis), and a rotary joint (hip roll joint) 213 in the roll direction (rotated around the x-axis), and thus has 3 degrees of freedom.

The knee joint unit 220 includes a rotary joint 221 in the pitch direction, and thus has 1 degree of freedom.

The ankle joint unit 230 includes a rotary joint 231 in the pitch direction and a rotary joint 232 in the roll direction, and thus has 2 degrees of freedom.

A total of six rotary joints may be included from among the hip joint unit 210, the knee joint unit 220, and the ankle joint unit 230 which are provided on each of the two legs 110L and 110R. Thus, a total of twelve rotary joints may be provided to the two legs 110L and 110R.

Meanwhile, the two legs 110L and 110R may be provided with multi-axis force and torque (F/T) sensors 24 between the feet 112L and 112R and the ankle joint units 230. The F/T sensors 24 detect whether or not the feet 112L and 112R touch the ground and load applied to the feet 112L and 112R by measuring three-directional components Fx, Fy and Fz of force and three-directional components Mx, My and Mz of moment transmitted from the feet 112L and 112R.

Although not shown in the drawings, the robot 100 is provided with actuators, such as motors, and the like that drive the respective rotary joints. A walking control unit to control general operations of the robot 100 may realize various motions of the robot 100 via appropriate control of the motors.

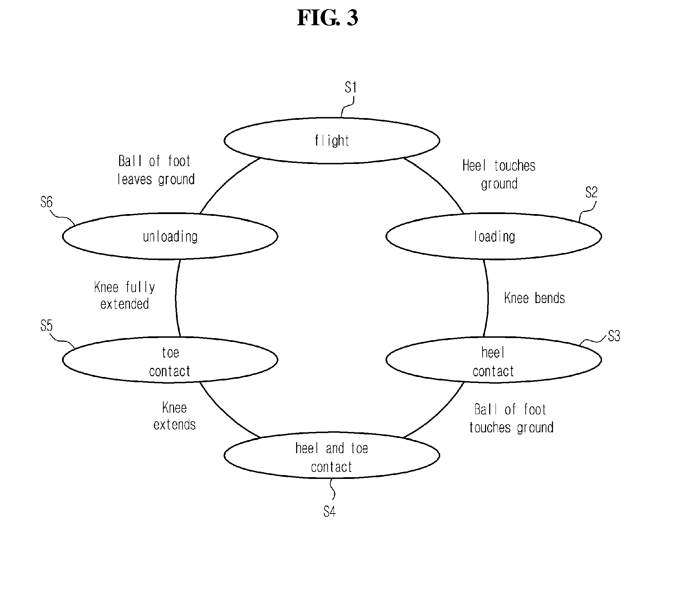

FIG. 3 is a view showing operating states of the walking robot and control actions for the respective operating states in the case of FSM based walking.

Referring to FIG. 3, in the torque-based FSM control method, the robot 100 has a plurality of predefined operating states (for example, six states S1, S2, S3, S4, S5 and S6). The respective operating states S1, S2, S3, S4, S5 and S6 indicate poses of one leg 110L or 110R of the robot 100 during walking. Appropriate transition between the poses of the robot 100 ensures stable walking of the robot 100.

A single walking motion is organized by the operating states S1, S2, S3, S4, S5 and S6 and via transition between the operating states.

The first operating state (flight state) S1 corresponds to a pose of swinging the leg 110L or 110R, the second operating state (loading state) S2 corresponds to a pose of loading the foot 112 on the ground, the third operating state (heel contact state) S3 corresponds to a pose of bringing the heel of the foot 112 into contact with the ground, the fourth operating state (heel and toe contact state) S4 corresponds to a pose of bringing both the heel and the toe of the foot 112 into contact with the ground, the fifth operating state (toe contact state) S5 corresponds to a pose of bringing the toe of the foot 112 into contact with the ground, and the sixth operating state (unloading state) S6 corresponds to a pose of unloading the foot 112 from the ground.

In order to transition from one operating state to another operating state, a control action to achieve such transition is required.

In more detail, in the case of transition from the first operating state S1 to the second operating state S2 (S1→S2), a control action in which the heel of the foot 112 touches the ground is required.

In the case of transition from the second operating state S2 to the third operating state S3 (S2→S3), a control action in which the knee (more particularly, the knee joint unit) connected to the foot 112 touching the ground bends is required.

In the case of transition from the third operating state S3 to the fourth operating state S4 (S3→S4), a control action in which the ball of the foot 112 touches the ground is required.

In the case of transition from the fourth operating state S4 to the fifth operating state S5 (S4→S5), a control action in which the knee connected to the foot 112 touching the ground extends is required.

In the case of transition from the fifth operating state S5 to the sixth operating state S6 (S5→S6), a control action in which the knee connected to the foot 112 touching the ground fully extends is required.

In the case of transition from the sixth operating state S6 to the first operating state S1 (S6→S1), a control action in which the ball of the foot 112 leaves the ground is required. In this way, to execute these control actions, the robot 100 calculates torque commands of the respective joints based on a corresponding control action, and outputs the calculated torque commands to the actuators, such as the motors, installed to the respective joints, to drive the actuators.

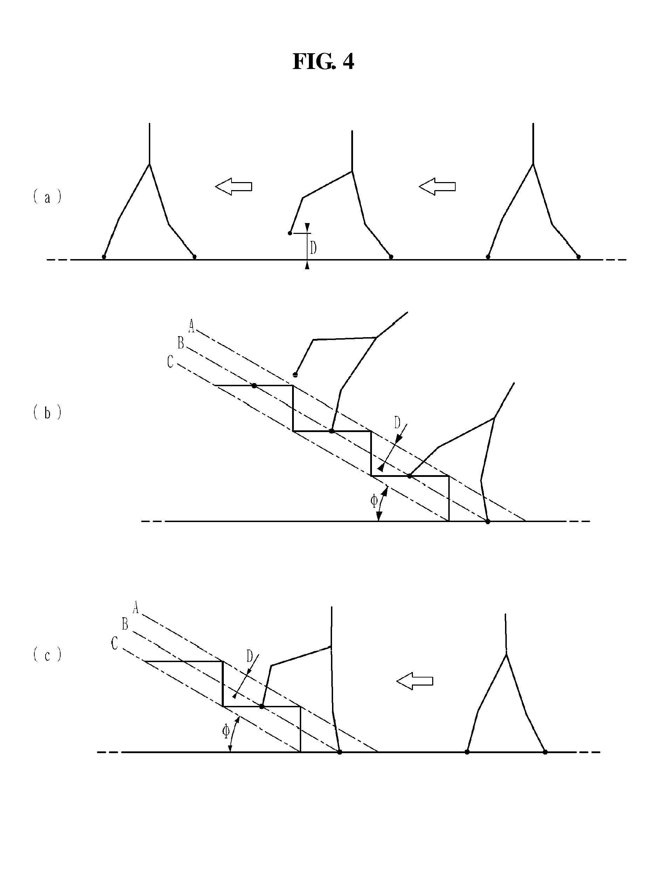

Through the torque-based FSM control method, walking of the robot 100 is controlled depending on the respective predefined operating states S1, S2, S3, S4, S5 and S6. Hereinafter, the walking robot, which may perform natural human-like walking and generate a stairs-walking target-trajectory using a level-walking target-trajectory, and a control method thereof will be described with reference to FIGS. 4 to 8.

FIG. 4 is an explanatory view of a walking robot control concept according to an embodiment of the present invention.

First, FIG. 4(a) is a view schematically showing walking of the robot on level ground. During walking on level ground, one of the two legs 110L and 110R of the walking robot serves as a stance leg that supports the ground during walking, and the other leg serves as a swing leg that bends during walking such that the foot thereof is lifted from the ground beyond a predetermined height D, i.e. beyond a ground clearance, and thereafter is moved forward such that the foot touches the ground. The above-described movements correspond to a level-walking target-trajectory of the swing leg and a level-walking target-trajectory of the stance leg.

FIG. 4(b) is a view explaining generation of a stairs-walking target-trajectory when stairs are present in front of the walking robot. As shown in FIG. 4(b), assuming that an angle between the ground and the deepest corner points of stairs is Φ, there may be obtained a line B that has the angle of Φ with the ground and obliquely extends from a current position of the foot of the walking robot on the ground to stairs. Generally, in the context of stairs terminology, the tread refers to the part of the stairway that is stepped on, while the riser refers to the vertical portion between each tread on the stair. Thus, the deepest corner points of stairs may refer to the corners formed by the intersecting points of each tread and riser, and may include the intersecting point of the first riser and the ground. Assuming that the line B is a continuation of the ground, points where the line B meets the stairs may be landing positions of the foot of the swing leg. In FIG. 4(b), a line A, which is spaced apart in parallel from the line B by a predetermined distance D, is referred to as a ground clearance. Also, a line C is a line that connects the deepest corner points of stairs to one another. The ground may refer to a landing or platform near the top or bottom step of the stairs, which may be a floor that is generally level or flat.

That is, according to the embodiment, for calculation of the stairs-walking target-trajectory, the angle between the ground and the stairs is applied, as a compensation value for a pitch-axis of each joint, to the level-walking target-trajectory. Thus, the walking robot may perform walking on stairs with maintaining balance of the upper body based on the stairs-walking target-trajectory as shown in FIG. 4(c).

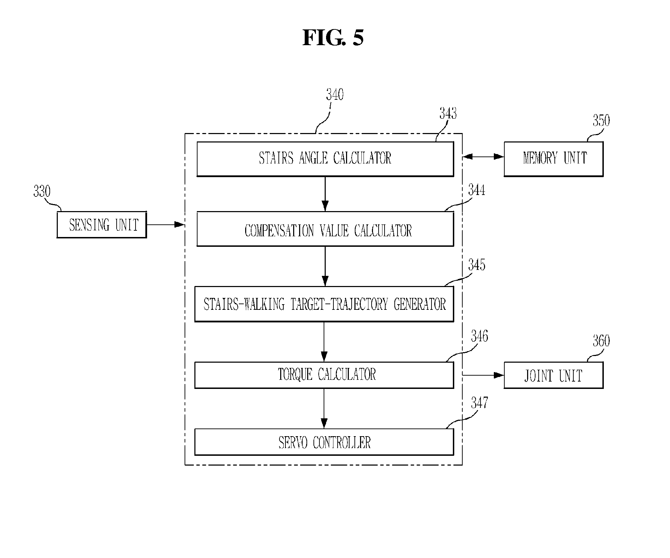

FIG. 5 is a control block diagram of the walking robot according to an embodiment of the present invention. In the embodiment, the walking robot includes a sensing unit 330, a walking control unit 340, a memory unit 350, and a joint unit 360.

The sensing unit 330 senses a current walking state of the robot to transmit the sensed result to the walking control unit 340, assisting the robot in selecting a walking pattern suitable for the sensed current walking state. For example, the sensing unit 330 senses change in the angles of the hip joint unit, knee joint unit and ankle joint unit over time. Additionally, the sensing unit 330 senses the surrounding environment of the robot. That is, the sensing unit 330 senses whether or not stairs are present in front of the robot to transmit the sensed result to the walking control unit 340. The sensing unit 330 may include one or more cameras, sonar, infrared, RFID, or lasers for visual sensing, and may take video or images of objects for image processing. The sensing unit 330 may also include audio sensors. The sensing unit may also include encoders, accelerometers, gyroscopes, and the like to measure changes in the robot.

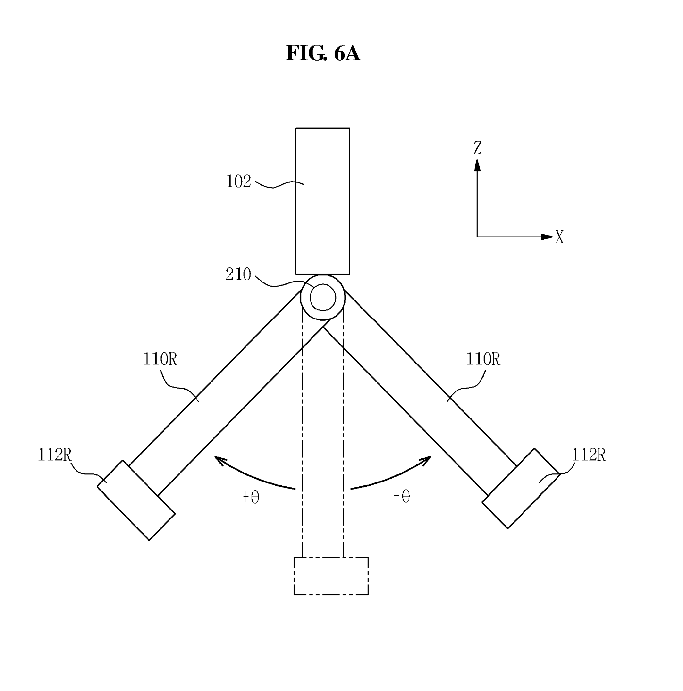

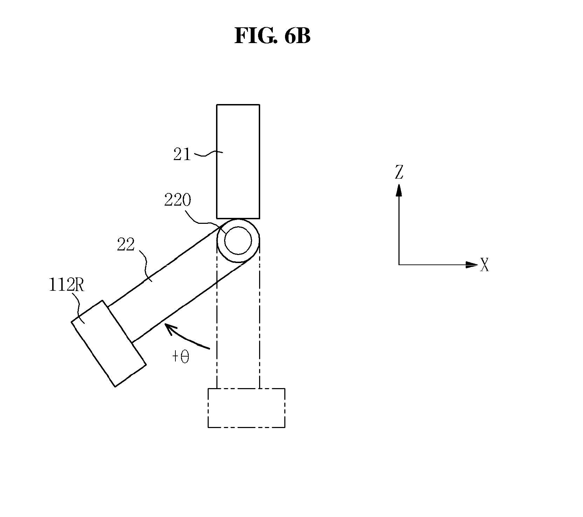

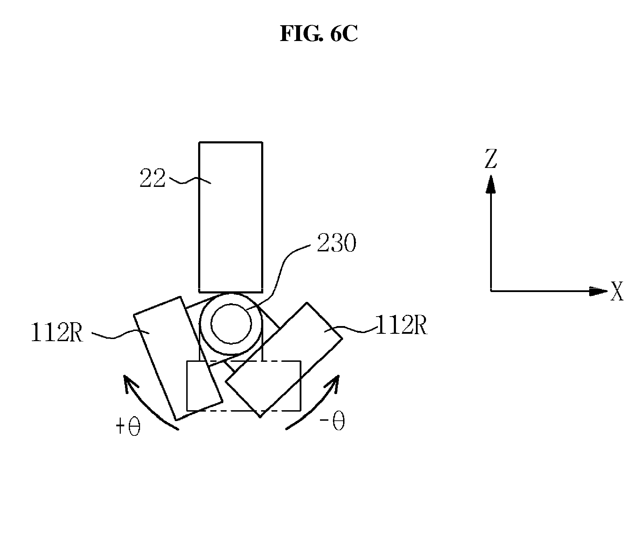

Meanwhile, a method of measuring rotating angles of the respective joint units is shown in FIGS. 6A to 6C. FIGS. 6A, 6B and 6C are diagrammatic side views of the robot respectively showing measurements of the rotating angles of the hip joint unit 210, knee joint unit 220 and ankle joint unit 230. In FIGS. 6A, 6B and 6C, the rotating angles of the respective joint units are measured in the pitch direction on the basis of a vertical axis, and the knee joint unit exists only in a $+\theta$ direction.

The memory unit 350 stores the level-walking target-trajectory of the robot. The level-walking target-trajectory may be generated by extracting knot points from data related to change in the angle of each joint unit 360 over time, and smoothly connecting the extracted knot points along a spline. Here, the knot point refers to an angle command of each joint unit 360 for implementation of the operating states, and correspond to the respective operating states.

The walking control unit 340 changes a walking pattern of the robot based on a current walking state of the robot sensed by the sensing unit 330, or generates the stairs-walking target-trajectory based on the surrounding environment of the robot sensed by the sensing unit 330.

The walking control unit 340 includes a stairs angle calculator 343, a compensation value calculator 344, a stairs-walking target-trajectory generator 345, a torque calculator 346, and a servo controller 347.

The stairs angle calculator 343 calculates the angle $\Phi$ between the ground and the deepest corner points of stairs. In this case, the angle $\Phi$ between the ground and the deepest corner points of stairs may be calculated by substituting a height and depth of each stair into a trigonometric formula. The calculated angle $\Phi$ is given to the compensation value calculator 344 that will be described hereinafter.

The compensation value calculator 344 calculates compensation values for pitch-axes of respective joints of the swing leg and the stance leg based on the angle $\Phi$ calculated by the stairs angle calculator 343.

In more detail, in the case in which the robot, which is walking on level ground, begins to walk up stairs, the compensation value calculator 344 calculates compensation values for pitch-axes of a hip joint and knee joint of the swing leg and a compensation value for a pitch-axis of a hip joint of the stance leg. This is because in order to prevent the swing leg from colliding with stairs when the robot, which is walking on level ground, begins to walk up the stairs, the hip joint and knee joint of the swing leg must bend more than when walking on level ground, but an ankle joint of the swing leg does not need to bend any more so than when walking on level ground. In the case of the hip joint of the stance leg, the compensation value thereof is calculated because it may be necessary to bend the hip joint of the stance leg more than when walking on level ground in order to prevent the robot from falling down. The following Equation 1, Equation 2 and Equation 3 are given to calculate the compensation values for the hip joint and knee joint of the swing leg and of the hip joint of the stance leg when the robot begins to walk up stairs.

In the following Equations, subscript "SW" indicates the swing leg, and 'ST' indicates the stance leg. Also, 'H' indicates the hip, and 'K' indicates the knee. Thus, '$\theta_{SW,H}$' in Equation 1 indicates the compensation value for the hip joint of the swing leg, and '$\theta_{SW,K}$' in Equation 2 indicates the compensation value for the knee joint of the swing leg. Also, '$\theta_{ST,H}$' in Equation 3 indicates the compensation value for the hip joint of the stance leg.

<Equation 1>

$$\theta_{SW,H}= -[(\pi/2)-\Phi]$$

<Equation 2>

$$\theta_{SW,K}= +[(\pi/2)-\Phi]$$

<Equation 3>

$$\theta_{ST,H}= -\Phi$$

In the case in which the robot, which is walking on level ground, begins to walk down stairs, the compensation value calculator 344 calculates compensation values for pitch-axes of a hip joint, knee joint and ankle joint of the stance leg. This is because the hip joint, knee joint and ankle joint of the stance leg must bend more than when walking on level ground to ensure that the swing leg stably touches the ground. The following Equation 4, Equation 5 and Equation 6 are given to calculate the pitch-axis compensation values of the hip joint, knee joint and ankle joint of the stance leg when the robot begins to walk down stairs. 'A' in Equation 6 indicates the ankle.

$$<\text{Equation 4}>$$

$$\theta_{ST,H} = -\Phi$$

$$<\text{Equation 5}>$$

$$\theta_{ST,K} = +(\pi - 2\Phi)$$

$$<\text{Equation 6}>$$

$$\theta_{ST,A} = -\Phi$$

The stairs-walking target-trajectory generator 345 calculates a stairs-walking target-trajectory of the stance leg and a stairs-walking target-trajectory of the swing leg using the compensation values calculated by the compensation value calculator 344. Here, the stairs-walking target-trajectory of the swing leg is calculated using Equation 7, and the stairs-walking target-trajectory of the stance leg is calculated using Equation 8. In this case, Equation 7 is applied to all joints of the swing leg, and Equation 8 is applied to all joints of the stance leg.

$$<\text{Equation 7}>$$

$$\theta_{stair,SW} = \theta_{level,SW} + \theta_{SW \times F}$$

$$<\text{Equation 8}>$$

$$\theta_{stair,ST} = \theta_{level,ST} + \theta_{ST \times F}$$

In Equation 7, '$\theta_{stair,SW}$' indicates a stairs-walking target-trajectory of the swing leg, and '$\theta_{level,SW}$' indicates a level-walking target-trajectory of the swing leg. Also, '$\theta_{SW}$' indicates the compensation value for the swing leg.
In Equation 8, '$\theta_{stair,ST}$' indicates a stairs-walking target-trajectory of the stance leg, and '$\theta_{level,ST}$' indi-

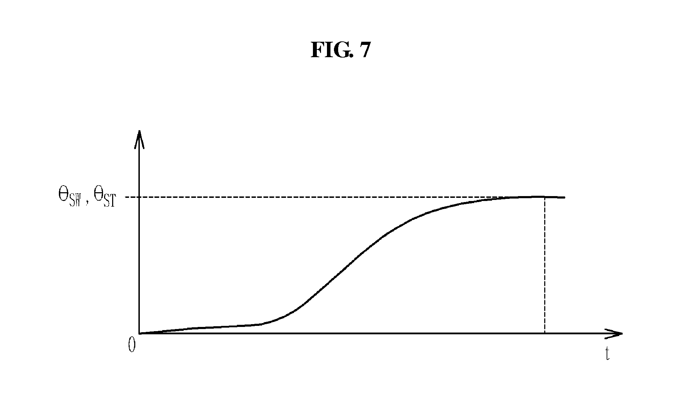

cates a level-walking target-trajectory of the stance leg. Also, '$\theta_{ST}$' indicates the compensation value for the stance leg.
Meanwhile, in Equation 7 and Equation 8, 'F' indicates an activation function. Referring to Equation 7 and Equation 8, it will be appreciated that the stairs-walking target-trajectory is calculated by multiplying the compensation value $\theta_{SW}$ or $\theta_{ST}$ by the activation function F, and adding the level-walking target-trajectory $\theta_{level,SW}$ or $\theta_{stair,ST}$ to the multiplied result. Multiplying the compensation value $\theta_{SW}$ or $\theta_{ST}$ by the activation function F prevents sudden change in the movement of the robot. In more detail, since the activation function has an S-shaped curve as shown in FIG. 7, multiplying the compensation value $\theta_{SW}$ or $\theta_{ST}$ by the activation function F causes a smooth increase the from zero to the compensation value $\theta_{SW}$ or $\theta_{ST}$. This may more effectively prevent sudden change in the movement of the robot than in the case of not using the activation function F.
The stairs-walking target-trajectory generated as described above is transmitted to the torque calculator 346, followed by outputting a torque that tracks the stairs-walking target-trajectory to the joint unit 360.
The torque calculator 346 calculates the torque to track the stairs-walking target-trajectory of each joint unit 360 generated by the stairs-walking target-trajectory generator 345. Calculation of the torque may be performed per control period. A control period may refer to the time to process or execute one or more commands. For example the control period may refer to the time for a torque control signal corresponding to the calculated torque to be transmitted, for example, to a joint unit so as to drive an actuator included in the joint unit. Calculation of the torque will be described hereinafter in more detail.
If a target angle of each joint is calculated by Equation 7 and Equation 8, the torque may be calculated in a proportional, integral, and/or derivative control manner using the calculated target angle and a target angular velocity obtained by taking the derivative of the target angle. The following Equation 9 is given to calculate the torque.

$$<\text{Equation 9}>$$

$$\tau_i = k_p \cdot (\theta_d - \theta_c) + k_d \cdot (\omega_d - \omega_c)$$

In Equation 9, '$\tau$' indicates a torque value per control period, 'i' indicates each joint of the leg, '$\theta_d$' indicates a target angle per control period, and '$\theta_c$' indicates a current angle (i.e., a current sensed angle). Also, '$\omega_d$' indicates a target angular velocity per control period, and may be obtained by taking the derivative of the target angle $\theta_d$. '$\omega_c$' indicates a current angular velocity (i.e. a current sensed angular velocity) per control period, and may be obtained by taking the derivative of the current

angle $\theta_c$. 'k$_p$' and 'k$_d$' indicate coefficients, which may be experimentally determined to achieve stable walking of the robot.

The servo controller 347 provides the torque calculated by the torque calculator 346 to the joint unit 360 of the leg, and outputs a torque control signal corresponding to the calculated torque to the joint unit 360 so as to drive the actuators, such as the motors, installed to the joint unit 360.

Thus, as the actuators, such as the motors, installed to the joint unit 360 are driven upon receiving the torque control signal from the servo controller 347, joints of the joint unit 360 may be moved to ensure that the robot realizes various natural walking patterns based on the stairs-walking target-trajectory.

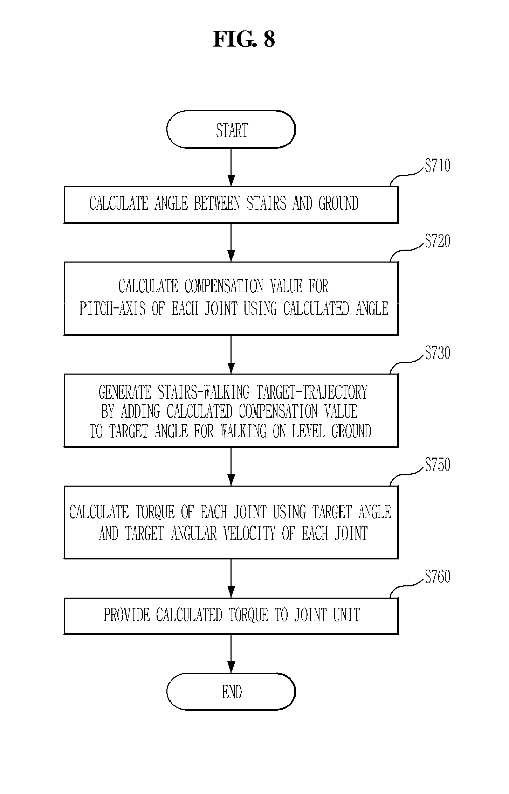

FIG. 8 is a flowchart showing a control method of a walking robot according to the embodiment of the present invention.

For convenience of description, it is assumed that the level-walking target-trajectory is generated in advance and stored in the memory unit.

In such a state, if it is sensed that stairs are present in front of the robot, the stairs angle calculator 434 calculates the angle between the ground and the deepest corner points of stairs (S710). The ground may refer to a landing or platform near the top or bottom step of the stairs, which may be a floor that is generally level or flat. In this case, the angle Φ between the ground and the deepest corner points of stairs may be calculated using the height and depth of each stair, and a trigonometric function.

After the angle Φ between the ground and the deepest corner points of stairs is calculated, the compensation value calculator 344 calculates the pitch-axis compensation values of the respective joints of the swing leg and the stance leg based on the calculated angle (S720). In the case in which the robot begins to walk up stairs, the pitch-axis compensation values of the hip joint and knee joint of the swing leg and of the hip joint of the stance leg are calculated using Equation 1, Equation 2 and Equation 3.

In the case in which the robot begins to walk down stairs, the pitch-axis compensation values of the hip joint, knee joint and ankle joint of the stance leg are calculated using Equation 4, Equation 5 and Equation 6.

After the compensation values for the respective joints of the legs are calculated, the stairs-walking target-trajectory generator 345 generates the stairs-walking target-trajectory by adding the calculated compensation values to the level-walking target-trajectory (S730). The stairs-walking target-trajectory may be calculated by multiplying the calculated compensation values by the activation function, and adding the level-walking target-trajectory to the multiplied result.

After the stairs-walking target-trajectory is generated as described above, the torque calculator 346 calculates torques to track the stairs-walking target-trajectory with respect to the respective joints (S750). In this case, the torque for a certain joint among the respective joints of the legs is calculated by adding a value, which is obtained by multiplying a predetermined coefficient by a difference between the target angle and the current angle of the corresponding joint, to a value which is obtained by multiplying a predetermined coefficient by a difference between the target angular velocity and the current angular velocity of the corresponding joint, as represented by Equation 9. Calculation of the torque is performed per control period.

After the torque is calculated, the servo controller 347 provides the calculated torque to the corresponding joint unit 360 (S760), and drives the actuators, such as the motors, installed to the joint unit 360, allowing the robot to walk up or down stairs along the stairs-walking target-trajectory.

As discussed above, embodiments of the present invention provide a control method of a walking robot having at least one joint unit provided at a leg thereof, the method comprising: calculating a compensation value for the at least one joint unit using an angle between a ground and deepest corner points of stairs; generating a stairs-walking target-trajectory required to allow the robot to walk on the stairs using the calculated compensation value and a level-walking target-trajectory; calculating a torque that tracks the generated stairs-walking target-trajectory; and controlling walking of the robot on the stairs by transmitting the calculated torque to the at least one joint unit.

The above description has explained the walking robot and the control method thereof according to the embodiment of the present invention. Although some embodiments described herein describe cases in which the walking robot calculates the angle between the ground and the deepest corner points of stairs, by way of example, a user may also input the angle between the ground and the deepest corner points of stairs in an alternative embodiment. In this case, the walking robot may further include an input unit that receives the angle from the user. The angle need not necessarily be received from a user. The angle may be received from another external source, such as from another robot. The angle information may be transmitted over a communication network, for example through a wired or wireless network.

The previously described embodiments are not limited to stairs which may refer to man-made stairs or steps in a building or man-made stairs or steps in an outdoor environment. For example, the above-described embodiments may be applied to other cases in which terrain has a shape similar to stairs. A vertical height of the terrain may be sensed by the robot, and a height and depth of each natural stair or step may be sensed so that the angle Φ may be calculated.

Alternatively, or in addition to the above-described embodiments, the robot may pre-store an angle between the ground and the deepest corner points of a set of stairs. For example, the robot may pre-store angles for a set of stairs for which the robot has previously visited, or for a set of stairs the robot encounters on a regular basis. The robot may register the set of stairs in a memory, for example memory unit 350. When the robot recognizes a set of stairs as being a registered set of stairs (for example, by using a sensor), the robot may obtain the angle between the ground and the deepest corner points of the stairs via a lookup table, therefore avoiding unnecessary calculations.

As is apparent from the above description, with a walking robot and a control method thereof according to the above-described embodiments, a simplified calculation of a target trajectory required for walking on stairs is accomplished.

Further, according to the above-described embodiments, walking with low servo-gain based on FSM control and torque servo control achieves a reduction in power consumption.

Furthermore, low servo-gain causes low joint rigidity, resulting in a reduction in collision shock with the surrounding environment.

In addition, realization of a human-like walking robot that walks with extended knees improves likeability of the robot.

The walking robot and robot controlling method according to the above-described example embodiments may use one or more processors, which may include a microprocessor, central processing unit (CPU), digital signal processor (DSP), or application-specific integrated circuit (ASIC), as well as portions or combinations of these and other processing devices.

The controlling method according to the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules to perform the operations of the above-described example embodiments, or vice versa.

Although a few example embodiments of the present invention have been shown and described, it would be appreciated by those skilled in the art that changes may be made in these embodiments without departing from the principles of the invention, the scope of which is defined in the claims and their equivalents.

**Claims**

1. A control method of a walking robot having at least one joint unit provided at a leg thereof, the method comprising:

   calculating a compensation value for the at least one joint unit using an angle between a ground and deepest corner points of stairs; generating a stairs-walking target-trajectory required to allow the robot to walk on the stairs using the calculated compensation value and a level-walking target-trajectory; calculating a torque that tracks the generated stairs-walking target-trajectory; and
   controlling walking of the robot on the stairs by transmitting the calculated torque to the at least one joint unit.

2. The control method according to claim 1, wherein calculation of the angle between the ground and the deepest corner points of stairs includes calculating the angle by using a height and depth of each stair.

3. The control method according to claim 1 or 2, wherein the compensation value is a compensation value for a pitch-axis of the at least one joint unit.

4. The control method according to any one of claims 1 to 3, wherein calculation of the compensation value for the at least one joint unit includes calculating compensation values for a hip joint and a knee joint of a swing leg and a hip joint of a stance leg when the robot ascends the stairs; and/or
   wherein calculation of the compensation value for the at least one joint unit includes calculating compensation values for a hip joint, a knee joint and an ankle joint of a stance leg when the robot descends the stairs.

5. The control method according to any one of claims 1 to 4, wherein generation of the stairs-walking target-trajectory includes:

   multiplying an activation function by the calculated compensation value; and
   adding the compensation value multiplied by the activation function to the level-walking target-trajectory to generate the stairs-walking target-trajectory.

6. The control method according to any one of claims 1 to 5, further comprising:

    sensing the stairs; and
    calculating the angle between the ground and the deepest corner points of stairs.

7. The control method according to any one of claims 1 to 6, further comprising receiving the angle between the ground and the deepest corner points of stairs.

8. The control method according to any one of claims 1 to 7, wherein compensation values and the stairs-walking target-trajectory are separately obtained for a swing leg and a stance leg of the robot; optionally wherein compensation values are selectively determined for joints of the swing leg and stance leg based upon whether the robot is ascending or descending the stairs.

9. A control method of a walking robot, the method comprising:

    storing a level-walking target-trajectory of the robot;
    dynamically changing a walking pattern of the robot in response to sensing stairs, wherein the changing of the walking pattern comprises carrying out the method according to any one of claims 1 to 8.

10. A walking robot comprising:

    at least one joint unit;
    a compensation value calculator arranged to calculate a compensation value for the at least one joint unit by using an angle between a ground and deepest corner points of stairs;
    a stairs-walking target-trajectory generator arranged to generate a stairs-walking target-trajectory using the calculated compensation value and a level-walking target-trajectory;
    a torque calculator arranged to calculate a torque that tracks the generated stairs-walking target-trajectory; and
    a servo controller arranged to control walking of the robot on the stairs by transmitting the calculated torque to the at least one joint unit.

11. The walking robot according to claim 10, wherein the compensation value is calculated using a height and depth of each stair; and/or wherein the compensation value is a compensation value for a pitch-axis of the at least one joint unit.

12. The walking robot according to any one of claims 10 or 11, wherein the compensation value calculator is arranged to calculate compensation values for a hip joint and a knee joint of a swing leg and a hip joint of a stance leg when the robot ascends the stairs; and/or wherein the compensation value calculator is arranged to calculate compensation values for a hip joint, a knee joint and an ankle joint of a stance leg when the robot descends the stairs.

13. The walking robot according to any one of claims 10 to 12, wherein the stairs-walking target-trajectory generator multiplies an activation function by the calculated compensation value, and adds the compensation value multiplied by the activation function to the level-walking target-trajectory to generate the stairs-walking target-trajectory.

14. The walking robot according to any one of claims 10 to 13, further comprising:

    a sensing unit arranged to sense the stairs; and
    a stairs angle calculator arranged to calculate the angle between the ground and the deepest corner points of stairs.

15. The walking robot according to any one of claims 10 to 14, further comprising an input unit arranged to receive the angle between the ground and the deepest corner points of stairs from an external source.

**FIG. 1**

**FIG. 2**

# FIG. 3

# FIG. 4

( a )

( b )

( c )

**FIG. 5**

**FIG. 6A**

# FIG. 6B

# FIG. 6C

**FIG. 7**

# FIG. 8

```
          ┌─────────────┐
          │    START    │
          └─────────────┘
                 │
                 ▼
┌─────────────────────────────────────────┐  S710
│  CALCULATE ANGLE BETWEEN STAIRS AND GROUND │
└─────────────────────────────────────────┘
                 │
                 ▼
┌─────────────────────────────────────────┐  S720
│        CALCULATE COMPENSATION VALUE FOR    │
│  PITCH-AXIS OF EACH JOINT USING CALCULATED ANGLE │
└─────────────────────────────────────────┘
                 │
                 ▼
┌─────────────────────────────────────────┐  S730
│     GENERATE STAIRS-WALKING TARGET-TRAJECTORY │
│       BY ADDING CALCULATED COMPENSATION VALUE │
│    TO TARGET ANGLE FOR WALKING ON LEVEL GROUND │
└─────────────────────────────────────────┘
                 │
                 ▼
┌─────────────────────────────────────────┐  S750
│ CALCULATE TORQUE OF EACH JOINT USING TARGET ANGLE │
│    AND TARGET ANGULAR VELOCITY OF EACH JOINT │
└─────────────────────────────────────────┘
                 │
                 ▼
┌─────────────────────────────────────────┐  S760
│     PROVIDE CALCULATED TORQUE TO JOINT UNIT │
└─────────────────────────────────────────┘
                 │
                 ▼
          ┌─────────────┐
          │     END     │
          └─────────────┘
```